(19) Europäisches Patentamt
European Patent Office
Office européen des brevets

(11) **EP 3 629 118 B1**

(12) **EUROPEAN PATENT SPECIFICATION**

(45) Date of publication and mention
of the grant of the patent:
**22.11.2023 Bulletin 2023/47**

(21) Application number: **19200046.1**

(22) Date of filing: **27.09.2019**

(51) International Patent Classification (IPC):
***G05B 23/02*** *(2006.01)*

(52) Cooperative Patent Classification (CPC):
**G05B 23/0254;** G05B 2219/25255;
G05B 2219/33027; G05B 2219/33034;
G05B 2219/34465

(54) **DIAGNOSTIC SYSTEM OF MACHINE TOOLS**

DIAGNOSTISCHES SYSTEM FÜR WERKZEUGMASCHINEN

SYSTÈME DE DIAGNOSTIQUE POUR MACHINES-OUTILS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.09.2018 CZ 20180518**

(43) Date of publication of application:
**01.04.2020 Bulletin 2020/14**

(73) Proprietor: **4dot Mechatronic Systems s.r.o.
639 00 Brno (CZ)**

(72) Inventors:
• **Otoupalik, Jan
  66447 Strelice (CZ)**
• **Burian, Josef
  66484 Stanoviste (CZ)**

(74) Representative: **Dadej, Leopold
  Na Valtické 339/6
  691 41 Breclav 4 (CZ)**

(56) References cited:
**EP-A1- 2 581 796        EP-A1- 2 998 894
WO-A1-2018/030033     US-A1- 2018 106 261**

**Description**

Field of the Invention

The invention relates to a diagnostic system of machine-tools, for the use in reducing the risk of machine damage, increasing the use of machines, reducing the risk of deviations on machined products, increasing productivity and process monitoring.

Background of the Invention

Machine-tools process different materials by material machining process. A change in shape can occur during machining. Cutting forces cause machine vibrations. These vibrations negatively affect the ability to detect a fault condition. For this reason, it is advisable to use diagnostic systems to filter vibrations caused by machining process.

Systems utilizing different types of sensors as protective members are known in the art. The sensors measure only exceeding the limit value and thus do not allow diagnostics of the machine-tools.

In addition, diagnostic systems using various types of sensors are known, with individual types of sensors being used to measure certain phenomena and the fault states resulting therefrom. However, this solution is inappropriate, since fault states can be detected incorrectly due to fault recognition only on the basis of data measured by one type of sensors.

In addition, diagnostic systems using vibration sensors are known, wherein these systems are used to monitor rolling bearings. However, this solution is not appropriate, since it detects the damage only of rolling bearings on which the sensor is placed, and thus it is not able to detect damages of guide and product or damages of other machine parts except the monitored part.

It would therefore be advantageous to provide a diagnostic system, which would allow a usage with machine-tools. This solution should allow a sufficiently precise evaluation of the various fault states of parts of the machine-tools, tools of the machine-tool or the workpiece. At the same time, the solution should allow identification of various stages of the machining process. Present solution should also allow identification of new, previously unknown, fault states and their storage in a set of model states.

Document US10525563 B2 discloses a diagnostic system for tools of machine-tools using machine learning. With machine learning the diagnostic system can learn to detect abnormal state of a machine-tool tool using data from various sensors. However, the data from the various sensors are processed substantially independently from each other so the accuracy of diagnosis is limited and it is not possible, for example, to diagnose a workpiece in addition to the tool of the machine-tool.

Document US20180106261 A1 discloses a diagnostic system for a compressor that can be used to predict faults in the compressor. However, this diagnostic system for a compressor might not be very precise or effective for diagnosis of a machine-tool or its part, no such application is mentioned in this document. Furthermore, the data from different sensors are processed independently so the accuracy of diagnosis is limited.

Document EP2998894 A1 discloses a diagnostic system for a machine, e.g. a robotic manipulator, that collects data form several sensors, processes the data from individual sensors, and makes a hypothesis of a condition of the machine. Specific application of this system on a machine-tool is however not mentioned and the individual processing of the data might limit the accuracy of the hypothesis.

Document EP2581796 A1 discloses a method for diagnostic reasoning for a component of a complex system. The method comprises a collection of data from sensors to create a diagnostic reasoner associated with the component and an installation of a configuration file which comprises data associated with a fault condition. The document does not disclose any application of the diagnostic reasoning to a machine-tool and does not disclose any combining of data from various sensors to achieve high enough precision to accurately diagnose a tool of a machine-tool or a workpiece.

Summary of the Invention

In line with the invention the above mentioned drawbacks are eliminated by a method according to claim 1. The dependent claims define further advantageous embodiment. The above described method of technical diagnostics of machine-tools by means of the diagnostics system for machine-tools with at least two sensors, with the measured data being further processed by the evaluation process including the measured data pairing step and the step of filtering the processed data, allows to achieve a goal of sufficiently accurate evaluation of various fault states, as using the data processed in this manner it is possible to identify fault states that could not be identified using data measured by only one sensor or using data measured by multiple sensors but without the measured data pairing step and without the step of filtering the processed data, since the evaluation takes into account data measured by all sensors.

If the processed data do not correspond to the model fault-free state and at the same time do not correspond to any of the model fault states, the control part issues information to the information interface that the machine-tool is in an unknown state. An evaluation that this is an unknown state helps to achieve the goal of identifying unknown states, as this state can be identified and saved as a new model state by the user interface.

The evaluation process further comprises a data modification step using a transfer function. The data modification step with the transfer function allows for the impact removal of individual sensors location in case the location of the sensors is different from the location of the sensors for which the model states waveforms were determined.

The diagnostic system further comprises at least one temperature sensor and the evaluation process further comprises a temperature compensation step of data measured by sensors, from which at least one is a vibration sensor and at least one is a position sensor, wherein the temperature compensation is performed based on the data measured by the temperature sensor. By temperature compensation of the data measured by the at least one vibration sensor and the at least one position sensor, it is possible to eliminate the effect of changing ambient temperature of the sensors, thereby increasing the accuracy of evaluation of various fault states of parts of machine-tool, tools, or a workpiece.

The position sensor is any of the group of linear encoder, rotary encoder, capacitive distance sensor, encoder, laser position sensor, confocal distance sensor, optical rangefinder, inductive sensor, magneto inductive sensor, or wire sensor.

At least one of the sensors is a temperature sensor, the temperature sensor being located in close proximity to at least one sensor of another type. By using the temperature sensor, it is possible to perform temperature compensation of data measured by sensors of another type.

Description of Drawings

The invention is further explained with the use of exemplary embodiments, which are described by way of the accompanying drawings, wherein:

Fig. 1 Shows a block diagram illustrating a diagnostic unit for machine-tools

Fig. 2 Shows a physical model and a specified physical model by means of real measurement.

Fig. 3 Shows a waveform of change in sensitivity of the vibration sensor, specifically the piezoelectric accelerometer.

Fig. 4 is a scheme of a diagnosed grinder.

Fig. 5 Shows a model fault-free state, a model fault state of wear of machine parts, and model fault state of the workpiece geometry.

Fig. 6 Shows paired data from piezoelectric accelerometer and first rotary encoder and the second rotary encoder.

Fig. 7 Shows waveform of processed data $g_{429}(x)$.

Fig. 8 Shows waveform of processed data $g_{430}(x)$.

Fig. 9 Shows trends of processed data $g_{420}(x)$, $g_{421}(x)$, $g_{430}(x)$, and $g_{431}(x)$.

Fig. 10 Shows a comparison of waveforms of processed data and model states.

Fig. 11 Shows a scheme of diagnosed carousel lathe.

Fig. 12 Shows a model fault-free state, a model fault state of a linear guide in the direction of axis x and a model fault state of a workpiece.

Fig. 13 Shows paired data from piezoelectric accelerometers and position sensors.

Fig. 14 Shows trends of processed data $g_{474}(x)$, $g_{475}(x)$, $g_{476}(x)$, and $g_{477}(x)$.

Fig. 15 Shows a comparison of waveforms of processed data and model states.

Exemplary Embodiments of the Invention

The scope of the present invention is defined by the appended claims.

An example of the invention is a diagnostic system of machine-tools. The machine-tool comprises a driving part, a guide and a machining part. The machining part comprises a tool consisting of a clamping part and a cutting edge which can be replaceable.

The tool is a part of the machine-tool directly involved in the machining process. The tool directly on the workpiece. The guide of the machine-tool comprises all machine parts, which form the machine kinematics and ensure the movement precision, and thus the machining precision. The machine-tool further comprises a machine-tool frame. The machine-tool further comprises a machine-tool control unit.

The diagnostics system of machine-tools comprises at least two sensors, wherein at least one of these sensors is a vibration sensor and at least one other sensor is a position sensor. The vibration sensor is an accelerometer. In this example of the vibration sensor, the vibration sensor is a piezoelectric accelerometer with integrated electronics. Compared to other types of accelerometers, it has higher resilience in the industrial environment and a larger measurement range. The piezoelectric accelerometer can only measure changes in acceleration, thus it is not possible to measure the stationary gravitational field of the earth (acceleration "g"), and so it serves to scan the absolute acceleration of dynamic processes. In an alternative example of the vibration sensor, the vibration sensor is any type of accelerometer other than piezoelectric accelerometer. The position sensor is any sensor of the group of linear encoder, rotary encoder, capacitive distance sensor, encoder, laser position sensor, confocal distance sensor, optical rangefinder, inductive sensor, magneto-inductive sensor or wire sensor. In an alternative example of the position sensor, the position sensor is any kind of position sensor other than linear encoder, rotary encoder, or capacitive distance sensor, encoder, laser position sensor, confocal distance sensor, optical rangefinder, inductive sensor, magneto-inductive sensor, or wire sensor. Position sensors are used to measure relative dynamic and static processes. The sensors are located on the machine-tool. The diagnostic system of machine-tools also includes the control part. In one of the examples of the control part, the control part includes a monitoring unit and a computing device. The sensors are data connected to the monitoring unit. The sensor data connection with the monitoring unit is wired or wireless. The sensor connection with the monitoring unit is direct or via a bus or via another computing unit. The computing unit means, for example, the control system of the machine-tool. The sensors are connected to the monitoring unit either analogically or digitally. In the case of analogue connection, the monitoring unit is equipped with an analogue-to-digital converter, which converts the signal from the sensor so that it is further digitally processable. In the case of digital connection, the sensor is equipped with an analogue-to-digital converter and digital signal is sent to the monitoring unit of the machine-tool diagnostic system. The monitoring unit is located near the monitored machine-tool. The monitoring unit is data connected with the computing device. The data connection between the monitoring unit and the computing device is wired or wireless. The computing device is a remote server. In an alternative example, the computing device is a machine control system or a monitoring unit or any other relevant computing device. The diagnostic system of machine-tools further comprises an information interface data connected to the control part. The information interface is any device capable of transmitting information that the machine-tool is in a certain state. In an example of the information interface, the information interface is a personal computer. In an alternative example, the information interface is any electronic device with a display or an autonomous cooperating system affecting the operation of the machine-tool. The data connection of the information interface and the control part is wired or wireless. In one of the exemplary embodiments, the information interface is part of the computing device.

In one of the exemplary embodiments, the monitoring unit is further data connected with peripheral devices. A peripheral device is any device from the group of a forming machine control unit, a production planning system, an engine changer of forming machine, an external database, other sensors and company information systems, quality monitoring systems, various other machines affecting the forming machine, storage systems, security systems, gauges or any other relevant peripheral devices.

In one of the exemplary embodiments, the diagnostic system of machine-tools further comprises at least one additional sensor from the group of temperature sensors, thin-walled temperature sensors, force sensors, pressure sensors, thin-walled pressure sensors, strain sensors, velocity sensors, gyroscopes, voltage meters, torque meters or any other sensors that refines the state evaluation of the machine-tool.

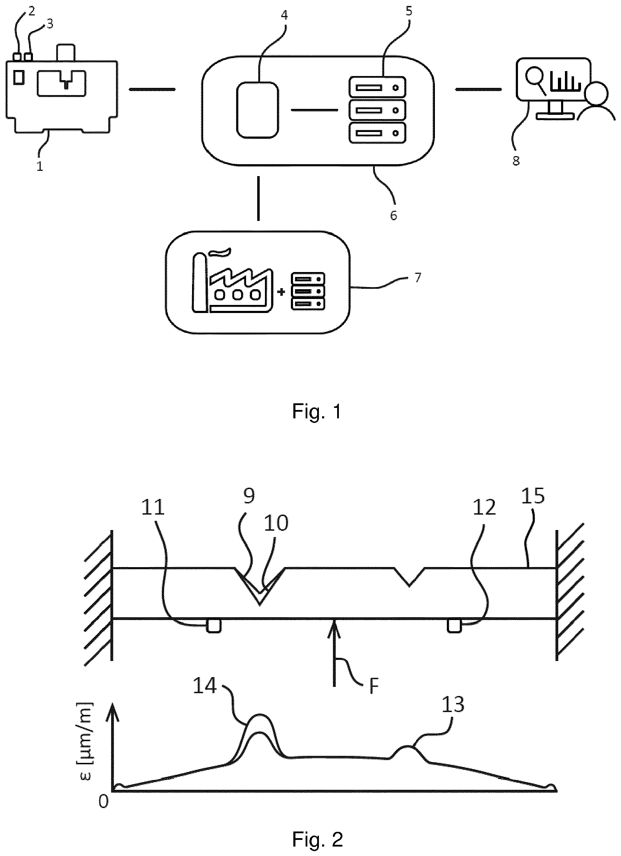

An example of the diagnostic system of machine-tools is shown in Figure 1 where the machine-tool is a machine-tool 1, the two sensors are a vibration sensor 2 and a position sensor 3, the monitoring unit is a monitoring unit 4, the computing device is a computing device 5, the control part is a control part 6, the peripheral device is a peripheral device 7 and the information interface is an information interface 8.

In all exemplary embodiments, the control part further comprises a memory. Model states are stored in the control part memory. Model states are model fault states or model fault-free state. Model fault states are any model fault states from the group of model fault states of machine-tool part, tool model fault states, or workpiece model fault states. Model fault-free state is the model fault-free state of at least one member from the group of a machine-tool part, a tool, or a workpiece. In one of exemplary embodiments of the model fault-free states, when a machine-tool part and the workpiece are diagnosed, the model fault-free state is a model fault-free state of the machine-tool part and of the workpiece. The model fault-free state and at least the first model fault state and at least the second model fault state are stored in the control part memory. None of the model fault states is the same as any other model fault state. All model states include variables and waveforms that change during the machining process and correspond to waveforms and quantities measured during fault-free operation or during a fault in the operation. Physical parameters affecting the model states are parameters related to material properties of individual machine parts, their mutual connection, waveforms of physical quantities, such as the force waveform, machine geometry, strain waveform, voltage waveform, the components dynamics and kinematics, heat transfer parameters, acoustic and electromagnetic properties. In the first exemplary embodiment of the model state waveforms derivations, the model state waveforms are derived based on theoretical physical description of the behaviour of the machine-tool during operation. Model state waveforms derived in such way enable the use with new machine-tools without the need for prior measurements. In an alternative embodiment of model state waveforms derivations, the model state waveforms are derived based on the theoretical physical description of the behaviour of the machine-tool during operation, modified based on the previous measurements of the actual behaviour of the machine-tool during operation. Model state waveforms derived in such way enable modifications of the theoretical physical description of the machine-tool behaviour based on the actual machine-tool behaviour during the operation and is therefore a refined physical description. An example of refinement of the physical description based on measurements during actual operation can be seen in Figure 2. In this example, the behaviour of a built-in beam 15 with two notches is described. This built-in beam 15 is a part of the frame of the machine-tool, and the physical description of the behaviour describes the strain 13 of the beam with the notch during operation. Based on the vibration measurements by the first vibration sensor 11 on the beam and the second vibration sensor 12 on the beam, the physical description of the behaviour of the built-in beam is modified so that one of the notches of the built-in beam is virtually enlarged. By virtual enlargement of the notch of the built-in beam and the physical behaviour description, the strain described during the machining process is larger and thus corresponds to the actual behaviour. The model was refined and the original notch 9 was changed to an enlarged notch 10 which is bigger than the notch 9. Based on the refined model, the beam strain 14 with the enlarged notch from the force F is larger and closer to the actual machine. In another example of the model state waveform derivations, the model state waveform derivations are derived from the machine created mathematical model on the basis of learned knowledge utilizing previous measurements of the actual behaviour of the machine-tool during operation. Machine creation of mathematical model based on the learned knowledge is implemented in this example through a neural network. Model state waveforms derived in such way allow for the use on machine-tools without manufacturing documentation or on machine-tools that have been in operation for a long time and various parts thereof have clearances which are not included in the manufacturing documentation. In another example of the model state waveform derivations, the model state waveform derivations are measured on the basis of previous measurements of the actual behaviour of the machine-tool during operation. Model state waveforms derived in such way allow for the use without the need to create any mathematical models. When deriving different model states, multiple derivation methods can be used. Examples Z of model state waveform derivations described above can be combined to obtain different model states in various ways. A fault of a machine-tool part is a fault of any part of the drive or the guide, such fault includes for example a fault of the machine-tool engine, hydraulic cylinder, brake, clutch, gear, bearings, guide or frame. The tool fault is a machining part fault, such fault includes for example a cracked machining part, wear of the machining part, bad settlement of the machining part, damage to the surface of the machining part, or damage to the geometry of the machining part. The workpiece fault is a fault of the input blank or the final product of the machine-tool, such as, for example, poor geometry, material structure, chemical properties of the material or surface structure. In one of the exemplary embodiments of the reasons for formation of fault of a machine-tool part, a tool fault, or a workpiece fault, the fault is caused by inappropriately set parameters of the machining process. Parameters of the machining process are, for example, cutting speed, cutting forces, size of material removal, setting of tool and working angles, cooling, or others.

In all exemplary embodiments, after the measurement, sensor data are sent to the control part. In the control part, the measured data are processed by an evaluation process comprising a measured data pairing step. In the measured data pairing step, the measured data from at least two sensors are paired so that the data have the same time stamp. Pairing the data so that the data have the same time stamp means that the measured waveforms are displaced so that data related to the identical moment of machining process begin on the time axis of the measured waveforms at the same time. In an alternative embodiment of the measured data pairing step, the measured data of at least two sensors are paired so that they are sorted according to a certain repeating pattern consecutively.

Once the measured data pairing step has been completed, the measured data become processed data, wherein the processed data can be further processed by any other steps.

The data thus processed are in the following step compared to the model states in the control part, and on the basis of this comparison, the control part issues information to the information interface that the machine-tool is in a fault-free state or in at least one of the model fault states. The control part issues information to the information interface that the machine is in a certain state, if the processed data is similar to the model state waveforms. The similarity is determined either through the information interface or by machine based on knowledge input or learned knowledge. Machine determination of similarity based on knowledge input is in one of the examples of similarity determination implemented through a state machine or multi-valued logic. The state machine needs to have clearly defined criteria, it is therefore suitable for determining the similarity of uniquely defined waveforms. Multi-valued logic is in turn suitable for working with indefinite outputs. Several processing methods can be used to determine similarity. The control part issues information on the machine-tool state to the information interface that displays it.

In one of example of similarity determination, in the case of machine-based similarity determination based on the knowledge input, a *COM* similarity definition operation is first defined to determine whether the waveforms are similar. The operation of the *COM* similarity determination is defined by the formula

$$\mathop{COM}_{x \in \langle A, B \rangle} [F @ G^*] < E,$$

where F is a group of model states, G* are the data for which similarity on the interval <A, B> with conditions E is determined. Operation @ represents operation of comparison of functions, such as subtraction and division, optionally subtraction of derivations, integrations and others. The COM operation represents a statistical evaluation of the subtractions of, for example, maximum value, average value, and others.

In one of the examples of similarity determination, in case of machine-based similarity determination based on the learned knowledge, a decision algorithm based on the processed data and designation of the respective states is created. Similarity determination according to this example includes a step of preparing data to determine when the respective states of the processed data are designated. Subsequently, a step of creating a decision algorithm is performed. In this exemplary embodiment, neural network represents the decision algorithm, and the creation of the decision algorithm thus includes the setting of input and output parameters of the neural network. Subsequently, the decision algorithm-learning step is carried out, when the processed data are sent to the decision algorithm together with the designation of the respective processed data states until the fault in determining the state of the processed data is removed. The result of this step is the creation of model states and the decision algorithm. In the next step, the decision algorithm is used to recognize the respective states of the machine-tool. In this example, similarity determination by machine-based similarity determination based on learned knowledge, together with the above-mentioned steps, it is advantageously possible to carry out a decision algorithm improvement step, in which additional processed data are sent to the existing decision algorithm together with the designation of the respective states of the processed data, wherein re-learning of the decision algorithm takes place. In this exemplary embodiment of the similarity determination by machine-based similarity determination based on learned knowledge together with the above-mentioned steps, it is advantageously possible to perform a measured data pairing step, wherein this step precedes the step of preparing data for learning. Machine-based similarity determination based on learned knowledge according to the example is suitable for similarity determination of complex processes with inaccurate models and with a large amount of measured data for learning.

In another example of similarity determination, a decision algorithm based on the processed data and model states where the physical significance of the processed data and the model states correspond to each other is generated in the case of machine-based similarity determination based on learned knowledge. Similarity determination according to this example includes a step of preparing data for learning when corresponding model states are assigned to the processed data. The decision algorithm in this example is represented by a neural network, and the creation of the decision algorithm includes the setting of the input and output parameters of the neural network. Subsequently, the decision algorithm-learning step is carried out when the processed data are sent to the decision algorithm along with the model states until the fault in determining the state of the processed data is removed. The result of this step is the creation of the decision algorithm. In the next step, the decision algorithm is used to recognize the respective states of the machine-tool. In this example of similarity determination by means of machine-based similarity determination based on the learned knowledge, together with the above-mentioned steps, it is advantageously possible to carry out a decision algorithm improvement step, when additional processed data are sent to the existing decision algorithm together with the corresponding model states, wherein re-learning of the decision algorithm thus takes place. In this exemplary embodiment of similarity determination by machine-based similarity determination based on learned knowledge, together with the above-mentioned steps, it is advantageously possible to perform a measured data pairing step, wherein this step precedes the step of preparing data for learning. Machine-based similarity determination based on learned knowledge according to the example is suitable for similarity determination without the need of utilizing previous measured data and it thus can be used for new machine-tools.

In one of the examples of the evaluation process, in the step of comparing processed data and model states, in the case that the processed data do not correspond to the model fault-free state of the machine-tool and at the same time they do not correspond to any model fault state, the control part determines that this is an unknown state. The control part issues information that the machine-tool is in an unknown state to the information interface that displays it, and at the same time allows the user to assign the displayed unknown state to a fault-free or a specific fault state of the machine-tool. After assigning the displayed unknown state to a fault-free or a specific fault state of the machine-tool part, tool, or workpiece, this information is stored in the control part memory as a new model fault-free or fault state.

In one of the exemplary embodiments, the evaluation process further comprises a data modification step using a transfer function. Waveforms of model states are determined for specific sensor location on the machine-tool. The transfer function describes signal transfer from the area of its origin to its scanning area. In one of the exemplary embodiments of the transfer function use, the data transfer function modifies the data so as to eliminate the effect of the location of the individual sensors if the location of the sensors is different from the location of sensors for which the model state waveforms were determined. In another exemplary embodiment of the transfer function use, the transfer function allows a replacement of multiple-location measurements using multiple sensors of the same type by a measurement in one location using one sensor by means of adjusting the data measured by one sensor by applying several different transfer functions, wherein each of these transfer functions modifies the data so that the data is comparable to the data otherwise measured by multiple sensors positioned in multiple locations. The location of the sensors affects the amplitude and the phase shift of individual data frequencies, wherein the transfer function is described in a complex form by the equation:

$$G(j\omega)\frac{y(t)}{u(t)} = \frac{y_0 e^{j.(\omega t+\varphi)}}{u_0 e^{j(\omega t)}} = \frac{y_0}{u_0} e^{j\varphi},$$

where $\frac{y_0}{u_0}$ is the amplitude ratio and $\varphi$ is the phase shift.

The transfer function is obtained analytically from the knowledge of mechanical behaviour of the machine-tool and the analytical equations thereof. In alternative embodiments of obtaining the transfer function, the transfer function is obtained by means of a parametric physical model or a model created by artificial intelligence or experimentally by means of an impulse response.

In one exemplary embodiment of the data modification step using the transfer function, the modified data are the measured data. In another exemplary embodiment of the data modification step using the transfer function, the modified data are the processed data.

In one example, the evaluation process includes the process of normalizing the processed data. In order to determine the state, it is necessary for the analysed data and the model waveform to match each other. This is accomplished by process of selecting the interval of processed data and by normalizing it to the desired definition domain corresponding to the definition domain of the model waveform values. This process is essential for the machine-based data comparison process. In one exemplary embodiment, there may be an "*F*" state described by functions $f_1(x)$ to $f_n(x)$ and measured data "*G*" described by functions $g_1(x)$ to $g_n(x)$, where $n$ indicates the number of signals describing the state. In exemplary comparison of the $f_1(x)$ and $g_1(x)$ functions with various definition domains, the function $g_1(x)$ is normalized to the function $g_1^*(x)$ with the same definition domain as $f_1(x)$ function, according to the equation:

$$g_i^*(x) = \frac{g_i\left(\frac{x-a_i}{b_i-a_i} * (d_i - c_i) + c_i\right) - \gamma_i}{\delta_i - \gamma_i} * (\beta_i - \alpha_i) + \alpha_i, x \in \langle a_i, b_i \rangle; i = 1.$$

In one example, the evaluation process further comprises a step of filtering the processed data. In the step of filtering the processed data, the data of at least one sensor are used to set filter parameters for filtering data from at least one sensor.

In the first example of filtering the processed data, the filtering is performed so that the filter parameter is a time interval determined on the basis of data from one sensor. The filter thus set is then applied to data from the second sensor, and after filtering, only a certain time interval remains from these data. In a second example of filtering the processed data, the filtration is performed so that the filter parameter is a time waveform of data from one sensor, which then determines the amplification or attenuation of the filtered data. The filter thus set is then applied to data from the second sensor, and after filtering, non-status information is suppressed in the data. Examples of non-status information are shocks, shock sequences, signals from other parts, process signals, component friction, certain frequencies captured by one sensor. In a third example of filtering the processed data, the filtration is performed so that the filter parameter is the actual data waveform from one sensor. The filter thus set is then applied to the data from the second sensor and the data from the first sensor are subtracted from the data from the second sensor. In a fourth example of the filtering of the processed data, the filtration is performed so that the filter parameter is the actual data waveform from one sensor, which is the position sensor and the kinematic model of the diagnosed machine-tool. The filter thus set is then applied to data from the second sensor, where the arithmetic mean of all measurements at the filter set points is formed. This eliminates noise and highlights the carrier information. Measurements need to be performed until at least the minimum number of measurement values at each measured point is obtained. This may vary depending on the noise - carrier information ratio in the data.

In another exemplary embodiment of the machine-tool diagnostic system and the evaluation process, a temperature sensor is further located on the machine-tool. Data measured by the temperature sensor are sent to the control part. The temperature sensor is located close to at least one sensor of another type. During the machine-tool operation, the area of the sensor is heated from the workpiece by energy release during the machining process, by friction of bearings during operation or by heat transfer from other parts of the machine-tool. Heating from the above-mentioned parts can cause temperature changes in the area of the sensor, thereby changing the sensitivity of the sensors. In this exemplary embodiment, the evaluation process thus includes the temperature compensation step. Based on the data from the temperature sensor, during the step of temperature compensation, the control part performs temperature compensation of the data measured by the sensors from which at least one is the vibration sensor and at least one is the position sensor.

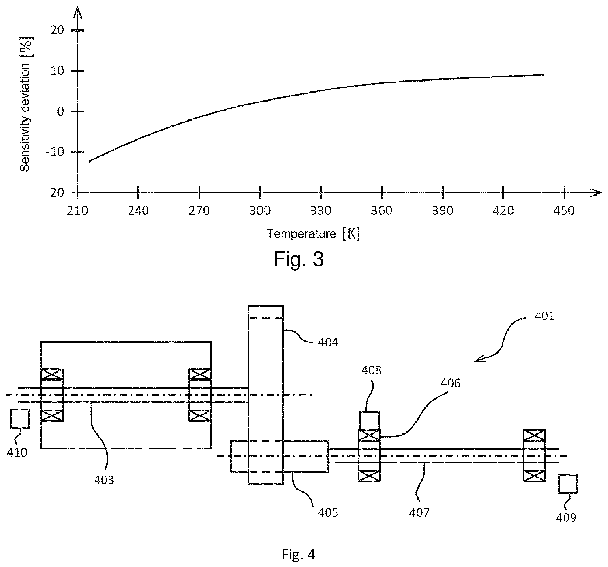

Figure 3 shows sensitivity change waveform of the vibration sensor, namely of the piezoelectric accelerometer. An exemplary embodiment of the temperature compensation step of the data measured by the vibration sensor is carried out as follows. The data measured by the vibration sensor are data related to dynamic processes. These processes are measured by changing the charge in piezoelectricity. The charge change is then converted to voltage, which is then converted to acceleration. The temperature compensation of the data is then performed by changing the charge $B_{qa}$:

$$B_{qa} = \frac{q}{a}$$

In another example of the evaluation process, the evaluation process includes data modification step. In the data modification step, the relevant information is separated from the rest of the data. Relevant information is information that describes physical processes that are relevant to a given state. Data modification means at least one operation from the group of noise abatement, data conversion to another space, integration, derivation, signal modulation, signal demodulation, resampling, trending, or static evaluation. An example of noise abatement operation is filtration through a top, bottom, or bandwidth filter, envelope method, and more. Conversion into another space allows for more convenient processing and display of some fault states. An example of conversion to another space is the Fourier Transform in which the time domain signal is converted to the frequency domain. Trends are created based on the result of certain operations performed at individual time points above the signal segment. An example of such operations is the evaluation of the effective value of the measured quantities, the amplitude of the measured quantities, the number of peak values or the wavelength.

In one of the examples of the data modification step, the modified data are the measured data. In another example of the data modification step, modified data are the processed data.

The evaluation process always includes at least steps of pairing the measured data, step of filtering the processed data, and step of comparing the processed data with the model states.

In a first example of the evaluation process step sequence, the evaluation process step sequence is as follows: the temperature compensation step, the data modification step using the transfer function, the measured data pairing step, the step of filtering the processed data, the data modification step, the step of normalization of the processed data, and the step of evaluating the similarity of the processed data to the model states.

In a second example of the evaluation process step sequence, the evaluation process step sequence is as follows: the temperature compensation step, the data modification step using the transfer function, the measured data pairing step, the step of filtering the processed data, and the step of evaluating the similarity of the processed data to the model states.

In a third example of the evaluation process step sequence, the evaluation process step sequence is as follows: the data modification step using the transfer function, the step of pairing the measured data, the step of filtering the processed data, and the step of evaluating the similarity of the processed data to the model states.

In a fourth example embodiment of the evaluation process step sequence, the evaluation process step sequence is as follows: the temperature compensation step, the measured data pairing step, the step of filtering the processed data, and the step of evaluating the similarity of the processed data to the model states.

In a fifth example of the evaluation process step sequence, the evaluation process step sequence is as follows:

the data modification step using the transfer function, the measured data pairing step, the step of filtering the processed data, and the step of evaluating the similarity of the processed data to the model states.

In a sixth example of the evaluation process step sequence, the evaluation process step sequence is as follows: the measured data pairing step, the step of filtering the processed data, and the step of evaluating the similarity of the processed data to the model states.

In a seventh example of the evaluation process step sequence, the evaluation process step sequence is as follows: the temperature compensation step, the measured data pairing step, the data modification step, the step of filtering the processed data, and the step of evaluating the similarity of the processed data to the model states.

In a eighth example of the evaluation process step sequence, the evaluation process step sequence is as follows: the data modification step using the transfer function, the measured data pairing step, the step of filtering the processed data, the data modification step, and the step of evaluating the similarity of the processed data to the model states.

In a ninth example of the evaluation process step sequence, the evaluation process step sequence is as follows: the measured data pairing step, the data modification step, the step of filtering the processed data, the data modification step and the step of evaluating the similarity of the processed data to the model states.

In a tenth example of the evaluation process step sequence, the evaluation process step sequence is as follows: the step of measured data modification, the temperature compensation step, the data modification step using the transfer function, the measured data pairing step, the step of filtering the processed data, the data modification step, the step of normalization of the processed data and the step of evaluating the similarity of the processed data to the model states.

In an eleventh example of the evaluation process step sequence, the evaluation process step sequence is as follows: the temperature compensation step, the data modification step using the transfer function, the measured data pairing step, the data modification step, the step of filtering the processed data, the step of normalization of the processed data and the step of evaluating the similarity of the processed data to the model states.

In a twelfth example of the evaluation process step sequence, the evaluation process step sequence is as follows: the temperature compensation step, the measured data pairing step, the data modification step using the transfer function, the step of filtering the processed data, the data modification step, the step of normalization of the processed data and the step of evaluating the similarity of the processed data to the model states.

In a thirteenth example the evaluation process step sequence the evaluation process step sequence is as follows: the temperature compensation step, the measured data pairing step, the data modification step using the transfer function, the step of filtering the processed data, the data modification step, the step of normalization of the processed data and the step of evaluating the similarity of the processed data to the model states.

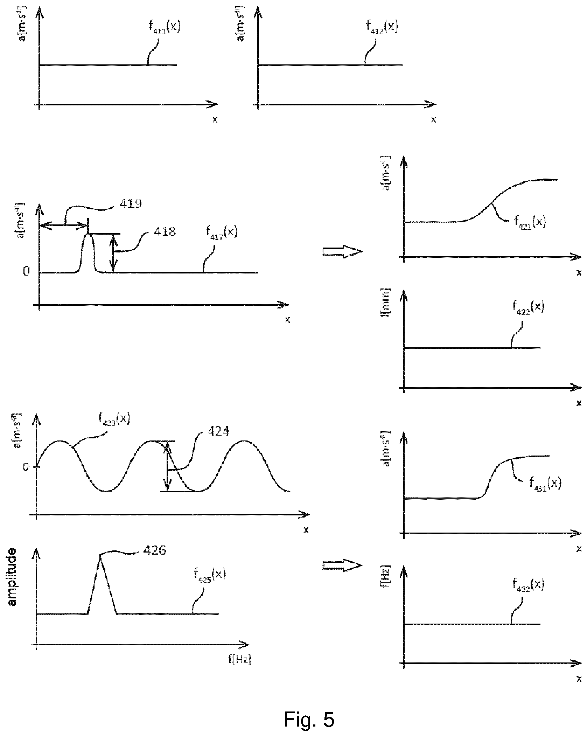

In the first the diagnosed machine is a grinder 401 as can be seen in Figure 4. The sensors used are a piezoelectric accelerometer 408 and two rotary encoders 409, 410. The piezoelectric accelerometer 408 is located on a bearing house of a bearing 406 of the grinding spindle 407 of the grinder 401. The first rotary encoder 409 is located on the grinding spindle 407 of the grinder 401 and it scans the position of the grinding spindle 407 or the position of the grinding tool 405. The second rotary encoder 410 is located on the driving spindle 403 of the grinder 401 and it scans the position of the driving spindle 403 or the position of the workpiece 404. The control part of the diagnostic system of machine-tools consists of a monitoring unit and a computing device, which is a remote server. The monitoring unit is directly data connected to the piezoelectric accelerometer 408 and to both rotary encoders 409, 410. In this example, there are three model states stored in the control part memory: model fault-free state, depicted in Figure 5 and described by curves $\{f_{411}, f_{412}\}$, model fault state of wear of the grinding tool 405 part, depicted in Figure 5 and described by curves $\{f_{421}, f_{422}\}$, and model fault state of the workpiece 404 geometry, depicted in Figure 5 and described by curves $\{f_{431}, f_{432}\}$. The waveforms of the model fault-free state, model fault state of the wear of the grinding tool 405 part and the model fault state of the workpiece 404 geometry are simulated on the basis of theoretical physical description of the behavior of the grinder 401 during operation modified based on the preceding measurements of the real behavior of the grinder 401 during operation and they are processed by the same steps used for processing measured data according to this example.

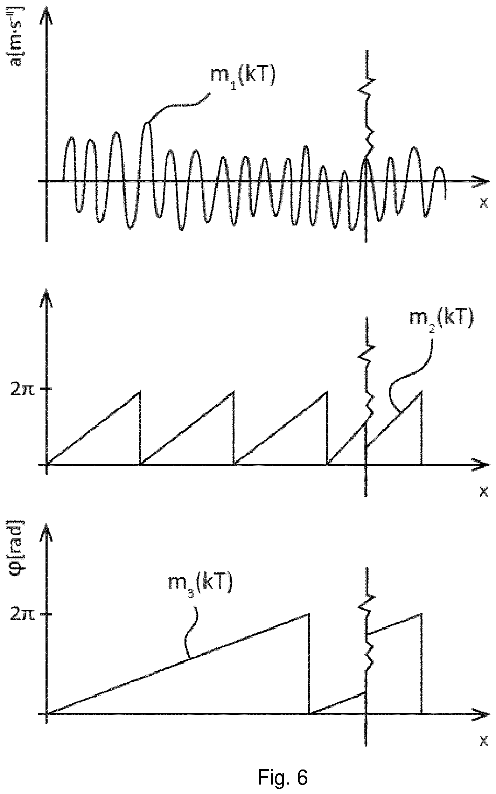

The model fault state of the workpiece 404 geometry is, in this exemplary embodiment, caused by the fault of remote transmission device of the grinder 401 hydraulic aggregate. The fault in the model fault state of the wear of the grinding tool 405 is manifested by a change in the size 418 of the amplitude of the model waveform of curve $f_{417}$ in specific angular rotation 419 of the shaft. The fault in the model fault state of the workpiece 404 geometry is manifested by the frequency 426 of the workpiece 404 geometry fault, which is visualized on the model waveform of the curve $f_{423}$, wherein the frequency 426 of workpiece 404 geometry faults is determined by the biggest amplitude in the frequency spectrum of the curve $f_{423}$, determined by the curve $f_{425}$ and the amplitude size 424 of the waveform of model curve $f_{423}$. The measured data from the piezoelectric accelerometer 408 are marked $m_1(kT) = \{m_1(1T),..,m_1(nT)\}$, the measured data from the first rotary encoder 409 are marked $m_2(kT) = \{m_2(1T),..,m_2(nT)\}$, and the measured data from the second rotary encoder 410 are marked $m_3(kT) = \{m_3(1T),..,m_3(nT)\}$, wherein $n$ is a number of measured values and $T$ is a measurement period. These measured data are evaluated by an evaluating process, where the first step is the measured data pairing step. In the measured data pairing step, every value $m_1(kT)$ is being assigned with a corresponding value $m_2(kT)$ and $m_3(kT)$. Data paired in such a way already carry information of vibration value in every position of the shaft 407, 403. Paired data are depicted in Figure 6. The second step is the step of filtering processed data. In this step, data from the piezoelectric accelerometer 408 are summed up in relation to the position of the grinding spindle 407 and driving spindle 403, and to the kinematics of the diagnosed assembly. Thus, data are formed, which correspond exactly to one period of the diagnosed machine part. In this step is thus performed a filtration of data $m_1(kT)$ from the piezoelectric accelerometer 408 by a filter given by data $m_2(kT)$ from the first rotary encoder 409 located on the grinding spindle 407. Data $m_1(kT)$ are thus summed up exactly in every measured point $T_{409} = t_n + 2\pi$ of the grinding spindle 407, where $t_n$ is the given point of measurement. At the same time, the filtration of data $m_1(kT)$ from the piezoelectric accelerometer 408 is performed by filter given by data $m_3(kT)$ of the second rotary encoder 410 located on the driving spindle 403. Data $m_1(kT)$ are thus summed up simultaneously exactly in every measured point $T_{410} = t_n + 2\pi$ of the driving spindle 403, where $t_n$ is given point of measurement. For every measured point of the position $p$ is further determined arithmetic mean of processed data according to formulas:

$$m_{12}^{\&}(pT_2) = g_{429}(x) = \frac{1}{j} \sum_{1}^{j} m_1(jpT_2)$$

$$m_{13}^{\&}(pT_3) = g_{430}(x) = \frac{1}{j} \sum_{1}^{j} |m_1(jpT_3)|$$

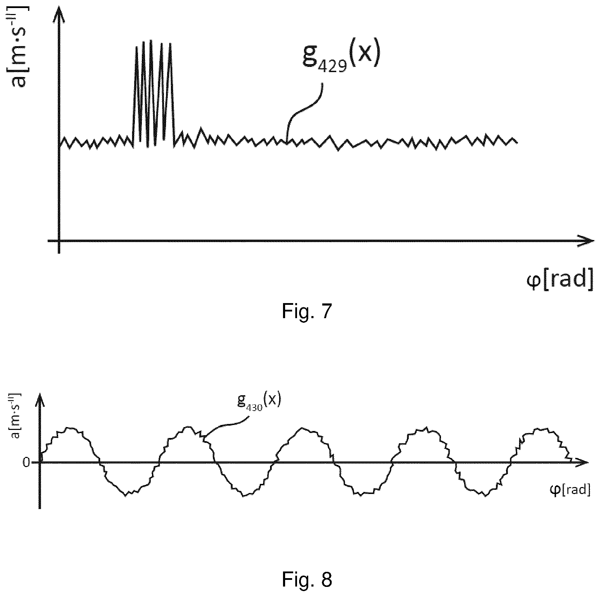

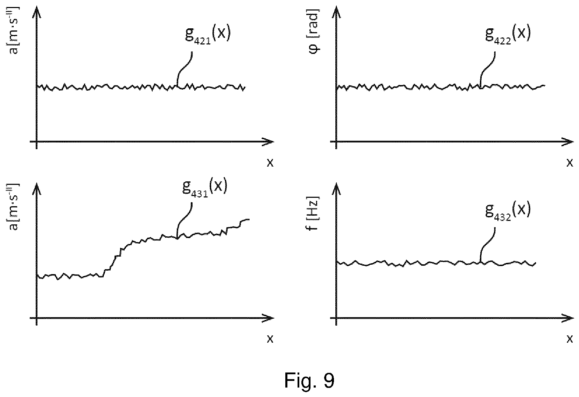

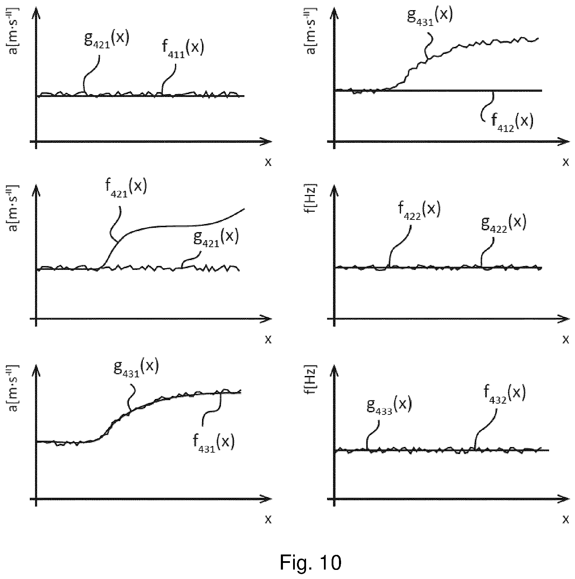

where $j$ is the rank of the turn of given shaft. With such modified data, there occurs noise suppression, which is high with measured data on machine-tools, while summing up the data from sufficient amount of turns and thus there occurs the highlight of carrier information. The third step is a data modification step, when processed data are filtered by lower die-type filter with the marginal frequency of 100 Hz. Waveforms of processed data $g_{429}$ and $g_{430}$ are shown in Figures 7 and 8. Further, there is performed a modification of data $g_{429}$ in this step, from which are created trend sets $\{g_{421}, g_{4221}\}$, and a modification of data $g_{430}$, from which trend sets $\{g_{431}, g_{432}\}$ are created. Processed data $g_{430}$ are transformed by fast Fourier transformation into frequency and it is monitored if the fault is at the fault frequency of the model fault state of a grinding tool 405. The fault frequency value creates the curve $g_{432}$. The fault amplitude size is analyzed by Min-Max method, which consists in the deduction of the lowest value of processed data from the highest one. Trend of these amplitudes creates the curve $g_{431}$. With processed data $g_{429}$ it is monitored if the fault is in the same angular rotation of the grinding spindle 407. The value trend of these angular rotations creates the curve $g_{422}$. The fault amplitude size is analyzed by the Min-Max method. The trend of these amplitudes creates the curve $g_{421}$, which can be seen in Figure 9. The fourth step is a step of evaluating the similarity of processed data and model states. The similarity evaluation is, in this exemplary embodiment, performed by information interface, which is, in this exemplary embodiment, a personal computer. As can be seen in Figure 10, processed pluralities of data $\{g_{421}, g_{431}\}$ do not correspond to the model fault-free state described by curves $\{f_{411}, f_{412}\}$, because waveforms are not similar to each other. As can be seen in Figure 10, processed data sets $\{g_{421}, g_{431}\}$ do not correspond to model fault state of the wear of grinding tool 405 described by curves $\{f_{411}, f_{412}\}$ because waveforms are not similar to each other. As can be seen in Figure 10, processed data sets $\{g_{431}, g_{432}\}$ correspond to model fault state of workpiece 404 geometry described by curves $\{f_{411}, f_{412}\}$ because waveforms are similar to each other.

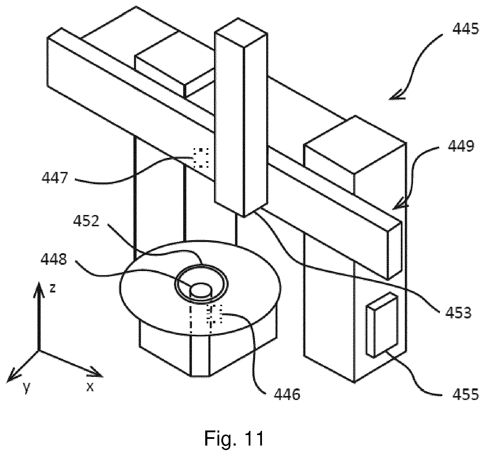

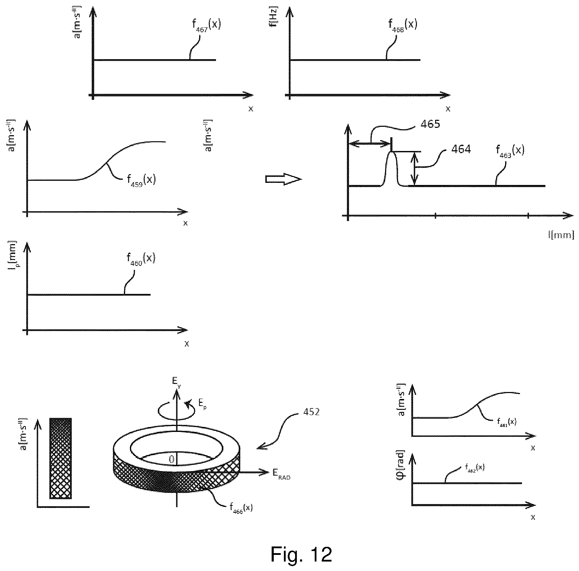

In another example the machine-tool is a carousel lathe 445 depicted in Figure 11. Sensors used are two piezoelectric accelerometers 446, 447 with integrated temperature sensors. The first piezoelectric accelerometer 446 is located on the bed spindle 448. The second piezoelectric accelerometer 446 is located on the linear guide 449 of the crossbar support. The control part of the machine-tool diagnostic system consists of a monitoring unit and a computing device, which is a remote server. The monitoring unit is directly data connected with piezoelectric accelerometers 446, 447 and further, it is data connected to the control system of carousel lathe 445. Information of position of the crossbar support on the linear guide 449 in the axis x direction, of the angular position of a workpiece 452 in relation to the tool 453, and of the position of the tool 453 in relation to the workpiece 452 on axis z, are obtained from the carousel lathe 445 control system. In this exemplary embodiment, there are three model states stored in the control part memory: a model fault-free state, visible in Figure 12 and described by the plurality of curves $F_1(x) = \{f_{467}(x), f_{468}(x)\}$, a model fault state of the linear guide 449 in axis x, visible in Figure 12 and described by the plurality of curves $F_2(x) = \{f_{459}(x), f4_{60}(x)\}$, and a model fault state of the workpiece 452, visible in Figure 12 and described by curves $F_3(x) = \{f_{461}(x), f_{461}(x)\}$, The model fault state of the linear guide 449 in axis x is derived on the basis of theoretical physical description of behaviour of the carousel lathe 445 during operation, where the fault manifests itself with a change in amplitude 464 size of the model waveform of the curve $f_{463}$ in the specific fault position 465 of the linear guide 449. The model fault state of the workpiece 452 is derived on the basis of the theoretical physical description of the carousel lathe 445 during operation, specifically by the Finite Element Method. The measured data from the first piezoelectric accelerometer 446 are marked as $m_1(kT) = \{m_1(1T),..,m_1(nT)\}$, measured data from the second piezoelectric accelerometer 447 are marked as $m_2(kT) = \{m_2(1T), ..,m_2(nT)\}$, measured data from the first temperature sensor integrated on the first piezoelectric accelerometer 446 are marked as $m_3(kT) = \{m_3(1T), ..,m_3(nT)\}$,, measured data from the second temperature sensor integrated on the second piezoelectric accelerometer 447 are marked as $m_4(kT) = \{m_4(1T), .., m_4(nT)\}$, data of the angular rotation of the workpiece 452 in relation to the tool 453 are marked as $m_5(kT) = \{m_5(1T), ..,m_5(nT)\}$, data of tool 453 position in relation to the workpiece 452 in axis z are marked as $m_6(kT) = \{m_6(1T), .., m_6(nT)\}$, and data of tool 452 position in relation to the linear guide 449 in the axis x direction are marked as $m_7(kT) = \{m_7(1T), .., m_7(nT)\}$, wherein $n$ is a number of measured values and $T$ is a measuring period. The first step is a temperature compensation step, wherein temperature compensated data are $m_1(kT)$ and $m_2(kT)$ measured data and they are compensated by measured data $m_3(kT)$ and $m_4(kT)$. The change in temperature sensitivity is described by the relation $C_\Delta(K)$, where $K$ is temperature. Data $m_1^{\%}(kT)$ and $m_2^{\%}(kT)$ are obtained by temperature compensation.

$$m_1^{\%}(\mathrm{kT}) = m_1(kT) * C_\Delta(m_3(kT))$$

$$m_2^{\%}(\mathrm{kT}) = m_2(kT)C_\Delta(m_4(kT)).$$

The second step is a modification data step by transfer function. Considering that only the first piezoelectric accelerometer 446 is positioned remotely from the source of vibration that occurred during the machining process, the transfer function is applied only to measured data of the first piezoelectric accelerometer 446. The transfer function is obtained experimentally by impulse responses, where the impulse is an impulse from machining process. In an alternative exemplary embodiment, it is possible as well to create the impulse artificially and monitor its spread throughout the material. To obtain transfer function, measured data $m_1^{\#}(kT) = \{m_1^{\#}(1T),..,m_1^{\#}(nT)\}$ are used, where $n$ is a number of measured values and $T$ is a measuring period. Scanning of the data starts before the impulse and it finishes with the end of its spread throughout the material. The discrete measured data are transferred into a complex domain by Z-transformation. First, a direct Z-transformation is used according to its prescription:

$$M_i(z) = Z\{m_i(kT)\} = \sum_{k=0}^{n} m_i(kT)z^{-k} = m_i(0) + m_i(T)z^{-1} + m_i(2T)z^{-2} + \cdots.$$

The continuous function of a complex variable $M_i(z)$ is obtained from the function $m_i(kT)$ by direct Z-transformation. We can then obtain $M_1^{\#}(z)$ and $M_p^{\#}(z)$ by substituting $m_1^{\#}(kT)$ and $m_p^{\#}(kT)$ into the formula. Data $M_p^{\#}(z)$ represent the impulse. Measured data from the sensor $M_1^{\#}(z)$, which is located on the housing of the bed spindle 448 bearing, represent the same impulse, which is affected by the system character, thus by the transfer function. The transfer function $TF_{1p}(z)$ is obtained by the knowledge of both signals and it can be expressed as follows:

$$TF_{1p}(z) = \frac{M_p^{\#}(z)}{M_1^{\#}(z)}$$

The application of the transfer function is performed by multiplying $M_m^{\%}(z)$ and $TF_{1p}(z)$. All data $m_m^{\%}(\mathrm{kT})$ is thus necessary to transfer by Z-transformation to $M_m^{\%}(z)$ at first, and the application can then be expressed by the

formula:

$$M_m^{\text{TF1p}}(z) = (M_m^{\%}z)TF_{1p}(z).$$

It is transferred from the complex domain to the time domain by reverse Z-transformation, according to the formula:

$$m_m^{\text{TF1p}}(kT) = Z^{-1}\{M_m^{\text{TF1p}}(z)\} = \frac{1}{2\pi j}\oint_C M_m^{TF1p}(z)z^{k-1}dz.$$

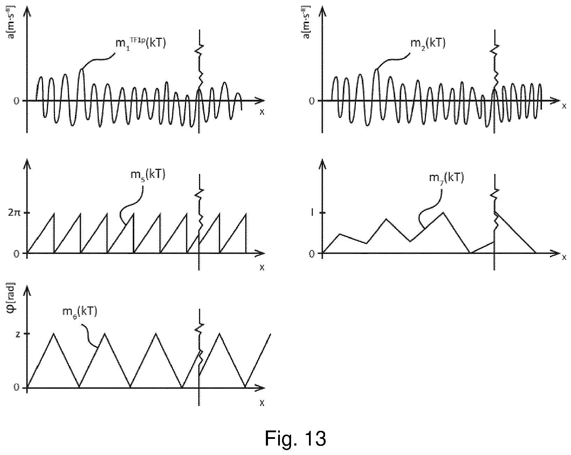

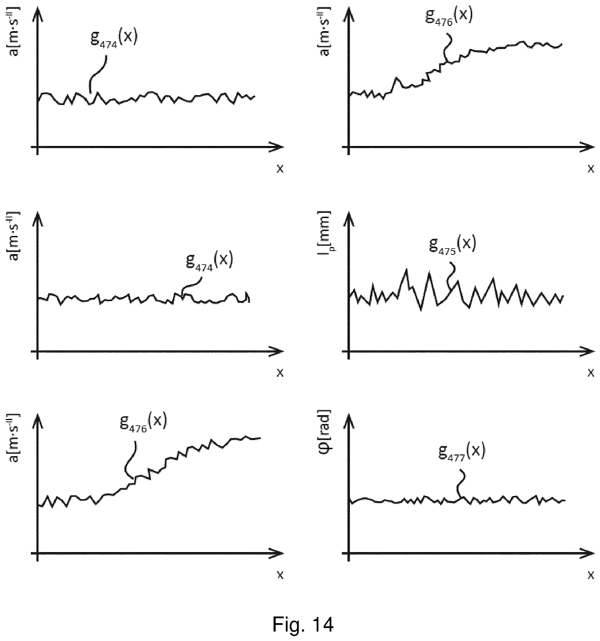

The curve C includes all poles of the expression $M_m^{\text{TF1p}}(z)z^{k-1}$. The third step is a measured data pairing step. In the measured data pairing step, there is a corresponding value $m_5(kT)$ and $m_6(kT)$ assigned to each value $m_1^{TF1p}(kT)$, and corresponding value $m_7(kT)$ is assigned to each value $m_2(kT)$. Such paired data already carry the information of vibration value in each measuring point. The paired data are depicted in Figure 13. The fourth step is a processed data filtration step, where processed data $m_1^{\text{TF1p}}(kT)$ are averaged in the same space points determined by processed position data $m_5(kT)$ and $m_6(kT)$. The processed data $m_2(kT)$ are averaged in the same points determined by position data $m_7(kT)$. With such filtered data, there occurs the suppression of noise, which is high at measured data on machine-tools, when data from sufficient number of turns is summed up. The fifth step is the data modification step, when processed data are further filtered by high pass filter with the marginal frequency of 20 kHz. The plurality of values G trends is created from such processed data by the process matching the process of creating model states. The plurality G contains data pluralities $\{g_{474}(x), g_{476}(x)\}$, $\{g_{474}(x), g_{475}(x)\}$, $\{g_{476}(x), g_{477}(x)\}$ depicted in Figure 14. The sixth step is a step of evaluating the similarity of processed data with the model states. Similarity evaluation is in this exemplary embodiment performed by machine on the basis of inserted knowledge, wherein input is a plurality of states F consisting of model states $\{f_{459}(x), f_{460}(x)\}$, $\{f_{461}(x), f_{462}(x)\}$, $\{f_{467}(x), f_{468}(x)\}$ and a plurality of modified data G consisting of modified data $\{g_{474}(x), g_{476}(x)\}$, $\{g_{474}(x), \{g_{475}(x)\}$, $\{g_{476}(x), g_{477}(x)\}$. The step of evaluating the similarity of processed data with model states, in this exemplary embodiment, comprises a processed data normalisation step, when the plurality G is transformed to the plurality $G^*$, which has the same definition domain and function domain as functions F. Functions F have the defining domain $Df_i = (a_i, b_i)$ and function domain $Hf_i = \langle \alpha_i, \beta_i \rangle$, where $i = 1, 2, 3$. An example of the transformation is a transformation of $g_{474}(t)$ to $g_{*474}(t)$ according to the formula:

$$g_{474}^* = \frac{g_{474}\left(\frac{t - a_{474}}{b_{474} - a_{474}} * (d_{474} - c_{474}) + c_{474}\right) - \gamma_{474}}{\delta_{474} - \gamma_{474}}(\beta_{474} - \alpha_{474}) + \alpha_{474}; \; t$$

$$\in \langle a, b \rangle$$

The comparison of the functions is realised by the COM operation, which determines the similarity of the functions:

$$\underset{x \in \langle A, B \rangle}{COM}[F @ G^*] < E$$

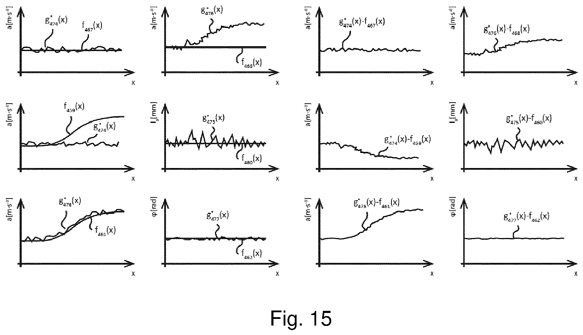

Where E is a plurality of conditions $\{e_1, e_3, e_3\}$. The comparison of functions can be seen in Figure 15, wherein in this exemplary embodiment it is evaluated by the *COM* function that the carousal lathe 445 is in the state of a workpiece 452 geometry fault state and it sends this information to information interface.

List of Reference Numbers

**[0063]**

| | |
|---|---|
| 1 | - Machine-Tool |
| 2 | - Vibration sensor |
| 3 | - Position sensor |
| 4 | - Monitoring unit |
| 5 | - Computing device |
| 6 | - Control part |
| 7 | - Peripheral device |
| 8 | - Information interface |
| 9 | - Notch |
| 10 | - Enlarged notch |
| 11 | - First accelerometer |
| 12 | - Second accelerometer |
| 13 | - Strain waveform |
| 14 | - Modified strain waveform on the basis of vibration measurement |
| 15 | - Built-in beam |
| 401 | - Grinder |
| 403 | - Driving spindle |
| 404 | - Workpiece |
| 405 | - Grinding tool |
| 406 | - Grinding spindle bearing |
| 407 | - Grinding spindle |
| 408 | - Piezoelectric accelerometer |
| 409 | - First rotary encoder |
| 410 | - Second rotary encoder |
| 418 | - Amplitude size of the model waveform of curve $f_{417}$ |
| 419 | - Angular shaft rotation |
| 424 | - Amplitude size of the waveform of the model curve $f_{423}$ |

426     - Frequency of workpiece geometry fault

445     - Carousel lathe

446     - First piezoelectric accelerometer with integrated temperature sensor

447     - Second piezoelectric accelerometer with integrated temperature sensor

448     - Bed spindle

449     - Linear guide of crossbar support

452     - Workpiece

453     -Tool

464     - Amplitude of model waveform of curve $f_{463}$

465     - Position of linear guide fault

**Claims**

1. A method of technical diagnostics of machine-tools by means of a diagnostic system of machine-tools (1) comprising an information interface (8) and a control part (6), wherein the control part (6) comprises a memory, the diagnostic system of machine-tools further comprising at least two sensors for positioning on the machine-tools (1), the control part memory further stores a model fault-free state comprising waveforms corresponding to waveforms and quantities measured by the at least two sensors in a fault-free operation, and the control part memory further stores at least a first model fault state and a second model fault state, the second model fault state being different than the first model fault state, wherein both the first model fault state and the second model fault state comprise waveforms corresponding to waveforms and quantities measured by the at least two sensors during a fault in the operation, the method being

   **characterised in that** at least one of the at least two sensors is a vibration sensor (2) and at least one other sensor is a position sensor (3), the method comprising the steps of: carry out a measurement and, thereafter, send the measured data from the at least two sensors to the control part (6), process the measured data from the at least two sensors by applying, in the control part (6) , an evaluation process comprising a measured data pairing step so that the data from individual sensors correspond time wise, and subsequently filter the processed data, the data from at least one sensor being used to set filter parameters for filtering data from at least one other sensor, wherein the processed data are subsequently compared to the model states in the control part (6), and, based on this comparison, issuing, by the control unit, information to the information interface (8) that the machine-tool (1) is in a fault-free state or in at least one of the model fault states.

2. The method of technical diagnostics of machine-tools by means of the diagnostic system of machine-tools (1) according claim 1 **characterised in that** the evaluation process further comprises a step of modifying the data measured by the sensors or the processed data using a transfer function.

3. The method of technical diagnostics of machine-tools by means of the diagnostic system of machine-tools (1) according to any of the preceding claims **characterised in that** the diagnostic system further comprises at least one temperature sensor and the evaluation process further comprises a temperature compensation step of data measured by the at least one vibration sensor (2) and the at least one position sensor (3), wherein the temperature compensation is performed based on the data measured by the temperature sensor.

**Patentansprüche**

1. Ein Verfahren zur technischen Diagnose von Werkzeugmaschinen mittels eines diagnostischen Systems für Werkzeugmaschinen (1), umfassend eine Informationsschnittstelle (8) und ein Steuerteil (6), wobei das Steuerteil (6) einen Speicher umfasst, wobei das diagnostische System für Werkzeugmaschinen ferner mindestens zwei Sensoren zur Positionierung an den Werkzeugmaschinen (1) umfasst, wobei der Steuerteilspeicher ferner einen modellfehlerfreien Zustand mit Wellenformen speichert, welche Wellenformen von den mindestens zwei Sensoren gemessenen Wellenformen und Größen in einem fehlerfreien Betrieb entsprechen, und der Steuerteilspeicher ferner zumindest einen ersten Modellfehlerzustand und einen zweiten Modellfehlerzustand speichert, wobei der zweite Modellfehlerzustand von dem ersten Modellfehlerzustand verschieden ist,

wobei sowohl der erste Modellfehlerzustand als auch der zweite Modellfehlerzustand Wellenformen umfassen, die Wellenformen und Größen entsprechen, die von den mindestens zwei Sensoren während eines Fehlers im Betrieb gemessen werden,
wobei das Verfahren **dadurch gekennzeichnet ist, dass** mindestens einer der mindestens zwei Sensoren ein Schwingungssensor (2) ist und mindestens ein weiterer Sensor ein Positionssensor (3) ist, wobei das Verfahren die folgenden Schritte umfasst: das Durchführen einer Messung, und dann, das Senden der Messdaten von den mindestens zwei Sensoren an das Steuerteil (6), das Verarbeiten der Messdaten von den mindestens zwei Sensoren durch Anwenden, in dem Steuerteil (6), eines Auswertungsprozesses, der einen gemessenen Datenpaarungsschritt umfasst, so dass die Daten von einzelnen Sensoren zeitweise entsprechen, und dann, das Filtern der verarbeiteten Daten, wobei die Daten von mindestens einem Sensor verwendet werden, um Filterparameter zum Filtern von Daten von mindestens einem anderen Sensor einzustellen, wobei die verarbeiteten Daten anschließend mit den Modellzuständen in dem Steuerteil (6) verglichen werden, und, basierend auf diesem Vergleich, das Ausgeben, durch die Steuereinheit, von Informationen an die Informationsschnittstelle (8), dass sich die Werkzeugmaschine (1) in einem fehlerfreien Zustand oder in mindestens einem der Modellfehlerzustände befindet.

2. Das Verfahren zur technischen Diagnose von Werkzeugmaschinen mittels des diagnostischen Systems für Werkzeugmaschinen (1) nach Anspruch 1, **dadurch gekennzeichnet, dass** der Auswertungsprozess ferner einen Schritt des Modifizierens der von den Sensoren gemessenen Daten oder der verarbeiteten Daten mittels einer Übertragungsfunktion umfasst.

3. Das Verfahren zur technischen Diagnose von Werkzeugmaschinen mittels des diagnostischen Systems für Werkzeugmaschinen (1) nach einem der vorhergehenden Ansprüche, **dadurch gekennzeichnet, dass** das diagnostische System ferner mindestens einen Temperatursensor umfasst und der Auswertungsprozess ferner einen Temperaturkompensationsschritt von Daten umfasst, die durch den mindestens einen Schwingungssensor (2) und den mindestens einen Positionssensor (3) gemessen werden, wobei die Temperaturkompensation basierend auf den von dem Temperatursensor gemessenen Daten durchgeführt wird.

## Revendications

1. Un procédé de diagnostique technique de machines-outils au moyen d'un système de diagnostique pour machines-outils (1) comprenant une interface d'informations (8) et une partie de commande (6), où la partie de commande (6) comprend une mémoire, le système de diagnostique pour machines-outils comprend en outre au moins deux capteurs pour un positionnement sur les machines-outils (1), la mémoire de partie de commande stocke en outre un état sans défaut de modèle comprenant des formes d'onde correspondant à des formes d'onde et des quantités mesurées par les au moins deux capteurs dans une opération sans défaut, et la mémoire de partie de commande stocke en outre au moins un premier état de défaut de modèle et un second état de défaut de modèle, le second état de défaut de modèle est différent du premier état de défaut de modèle,

où le premier état de défaut de modèle et le second état de défaut de modèle comprennent des formes d'onde correspondant à des formes d'onde et des quantités mesurées par les au moins deux capteurs pendant un défaut dans l'opération,
le procédé est **caractérisé en ce qu'**au moins l'un des au moins deux capteurs est un capteur de vibrations (2) et au moins un autre capteur est un capteur de position (3), le procédé comprend les étapes consistant à : effectuer une mesure et, ensuite, envoyer les données mesurées des au moins deux capteurs à la partie de commande (6), traiter les données mesurées à partir des au moins deux capteurs en appliquant, dans la partie de commande (6), un processus d'évaluation comprenant une étape d'appariement de données mesurées de telle sorte que les données provenant de capteurs individuels correspondent dans le temps, puis filtrer les données traitées, les données provenant d'au moins un capteur sont utilisées pour régler des paramètres de filtre pour filtrer des données à partir d'au moins un autre capteur, où les données traitées sont ensuite comparées aux états de modèle dans la partie de commande (6), et, sur la base de cette comparaison, délivrer, par l'unité de commande, des informations à l'interface d'informations (8) que la machine-outil (1) est dans un état sans défaut ou dans au moins l'un des états de défaut de modèle.

2. Le procédé de diagnostique technique de machines-outils au moyen du système de diagnostique pour machines-outils (1) selon la revendication 1, **caractérisé en ce que** le processus d'évaluation comprend en outre une étape de modification des données mesurées par les capteurs ou des données traitées à l'aide d'une fonction de transfert.

3. Le procédé de diagnostique technique de machines-outils au moyen du système de diagnostique pour machines-outils (1) selon l'une quelconque des revendications précédentes, **caractérisé en ce que** le système de diagnostique comprend en outre au moins un capteur de température et le processus d'évaluation comprend en outre une étape de compensation de température de données mesurées par au moins un capteur de vibration (2) et au moins un capteur de position (3), où la compensation de température est effectuée sur la base des données mesurées par le capteur de température.

Fig. 1

Fig. 2

Fig. 3

Fig. 4

Fig. 5

Fig. 6

Fig. 7

Fig. 8

Fig. 9

Fig. 10

445

449

447

452

448

453

z

448

y    x

446

455

Fig. 11

Fig. 12

Fig. 13

Fig. 14

Fig. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10525563 B2
- US 20180106261 A1
- EP 2998894 A1
- EP 2581796 A1